# EUROPÄISCHE PATENTSCHRIFT

(11) **EP 3 468 899 B1**
(45) Veröffentlichungstag und Bekanntmachung des Hinweises auf die Patenterteilung: **01.09.2021**
(21) Anmeldenummer: 17732823.4
(22) Anmeldetag: 13.06.2017
(51) Int. Cl.: B65G 1/137

(54) **RENDEZVOUS-KOMMISSIONIERUNG MIT ÖRTLICH VARIABLER KOMMISSIONIERSTATION**
RENDEZVOUS ORDER-PICKING SYSTEM WITH POSITIONALLY VARIABLE ORDER-PICKING STATION
PRÉPARATION DE COMMANDES SUR RENDEZ-VOUS UTILISANT UN POSTE DE PRÉPARATION DE COMMANDES VARIABLE DANS L'ESPACE

(30) Priorität: 13.06.2016 DE 102016110820
(43) Veröffentlichungstag der Anmeldung: 17.04.2019
(73) Patentinhaber: SSI Schäfer Automation GmbH (AT), 8051 Graz (AT)
(72) Erfinder: BUCHMANN, Rainer, 8046 Graz (AT)
(74) Vertreter: Witte, Weller & Partner Patentanwälte mbB
(86) Internationale Anmeldenummer: PCT/EP2017/064333
(87) Internationale Veröffentlichungsnummer: WO 2017/216127

(56) Entgegenhaltungen:
- EP-A1- 2 746 194
- US-A1- 2013 103 552
- US-A1- 2014 100 998

## Beschreibung

Die vorliegende Erfindung betrifft ein Lager- und Kommissioniersystem sowie ein Verfahren zum Betreiben desselben, die zum Durchführen einer "Rendezvous-Kommissionierung" eingerichtet sind. Die Rendezvous-Kommissionierung zeichnet sich dadurch aus, dass sowohl die materialflusstechnischen Quellen als auch die materialflusstechnischen Senken, die durch Kommissionierplätze bzw. Kommissionier-Arbeitsstationen implementiert sind, innerhalb des Gesamtsystems beweglich sind. Diese variablen bzw. beweglichen Kommissionierplätze stellen einen zusätzlichen Freiheitsgrad bei der Planung der Kommissionierung sowie während des Betriebs des Systems dar.

Im Stand der Technik sind im Wesentlichen zwei Kommissionierprinzipien bekannt, nämlich das Ware-zum-Mann-Prinzip (WzM-Prinzip) und das Mann-zur-Ware-Prinzip (MzW-Prinzip).

Beim MzW-Prinzip bewegen sich die (mobilen) Kommissionierer durch ein Lager, um (stationäre) Artikel direkt aus den (stationären) Lagerorten zu entnehmen und in Zielstellen abzugeben, die der Kommissionierer mit sich führt. Es sind z.B. Lösungen bekannt, bei denen der Kommissionierer auf einem Regalbediengerät mitfährt, um Artikel aus Paletten zu entnehmen, die in Regalplätzen eines Hochregallagers bevorratet sind, und die entnommenen Artikel auf eine Palette abgibt, die auf dem Regalbediengerät mitgeführt wird und später an den Kunden versendet wird.

Beim WzM-Prinzip werden die Artikel bewegt, wohingegen die Kommissionierer stationär sind. Das WzM-Prinzip kennt viele Ausprägungen. In einer sehr einfachen Ausprägung werden die (Kommissionier-)Quellen, wie z.B. Lagerbehälter, über stationäre Stetigförderer, wie z.B. Band- oder Rollenförderer, zu stationären Kommissionierplätzen transportiert, wo der Kommissionierer steht, um Artikel zu entnehmen und in Zielbehälter, wie z.B. Auftragsbehälter, abzugeben, die ebenfalls über stationäre Stetigförderer zum Kommissionierplatz transportiert werden können.

Aktuell werden die stationären Stetigförderer zunehmend durch fahrerlose Transportsysteme substituiert, die autonom fahrende Fahrzeuge aufweisen. Die Fahrzeuge holen z.B. Lagerbehälter aus Lagerbereichen ab und fahren die Lagerbehälter zu Kommissionierplätzen, deren Position innerhalb des Gesamtsystems fix bzw. stationär ist. Um Ein-/ Auslagervorgänge der Lagerbehälter zu eliminieren, gibt es ferner bereits Ansätze, kleine transportable Regale mit den Fahrzeugen direkt aus den Lagerbereichen, ohne Umlagerung der Artikel aus den Regalen auf die Fahrzeuge, zu den stationären Kommissionierplätzen zu transportieren, wie es z.B. in der WO 2007/011814 A2 der Firma Kiva offenbart ist. Das Dokument US2013/103552 A1 offenbart ein Lager- und Kommissioniersystem bei dem zu kommissionierende Güter an Kommissionierplätzen gemäß Kundenaufträgen aus Quellbehältern entnommen und in Zielbehälter abgegeben werden. Das System weist eine Vielzahl von Fahrzeugen zum Transportieren der Quellbehälter und der Zielbehälter innerhalb des Systems; einen Lagerbereich, wo eine Vielzahl der Quellbehälter, vorzugsweise in Regalen, bevorratet sind; einen Aktionsbereich, in welchem sich die Fahrzeuge, vorzugsweise autonom, bewegen; einen Kommissionierplatz; und eine Steuereinrichtung auf.

Ein Problem dieser Ansätze ist darin zu sehen, dass Transportwege relativ lang sind und dass (Auftrags-)Durchlaufzeiten groß sind. Ein weiteres Problem ist darin zu sehen, dass eine Anzahl der Kommissionierplätze nicht flexibel an eine Auslastung des Systems angepasst werden kann. In Zeiten geringer Auslastung sind einige Kommissionierplätze verwaist, d.h. bleiben unbesetzt, wohingegen zu Zeiten von Auftragsspitzen (z.B. während der Weihnachtszeit im E-Commerce) eigentlich mehr Kommissionierplätze benötigt werden, als eigentlich vorhanden sind.

Es ist eine Aufgabe der vorliegenden Erfindung, ein Lager- und Kommissioniersystem sowie ein Verfahren zum Betreiben desselben bereitzustellen, die die Vorteile des WzM-Prinzips und des MzW-Prinzips vereinen bzw. deren Nachteile eliminieren. Insbesondere ist eine Kommissionierleistung (Picks/Stunde) zu verbessern. Weiter ist es wünschenswert flexibel auf schwankende Auslastungen reagieren zu können.

Diese Aufgabe wird durch ein Lager- und Kommissioniersystem gelöst, das nach einem Rendezvous-Kommissionier-Prinzip betrieben wird. Beim Rendezvous-Kommissionier-Prinzip werden zu kommissionierende Güter an örtlich variablen Kommissionierplätzen gemäß Kundenaufträgen aus Quellbehältern entnommen und in Zielbehälter abgegeben. Das entsprechende System weist auf: eine Vielzahl von Fahrzeugen, insbesondere von autonom verfahrbaren Fahrzeugen, wie z.B. AGV ("Automated Guided Vehicles"), "Weasel" (Trademark, Shuttle der Anmelderin) oder Mini-Regalbediengeräte (siehe DE 10 2013 106 640 A1). Die Fahrzeuge dienen dem Transport der Quellbehälter und Zielbehälter, wobei der Begriff Behälter nicht einschränkend zu verstehen ist. Es können auch Paletten, Tablare, Kartons und Ähnliches transportiert werden. Ferner weist das System einen Lagerbereich und einen Aktionsbereich auf. Im Lagerbereich werden die Quellbehälter, vorzugsweise in Regalen, bevorratet. Die Quellbehälter können artikelrein bzw. fachunterteilt-artikelrein bestückt sein. Im Aktionsbereich bewegen sich die Fahrzeuge vorzugsweise autonom. Außerdem weist das System mindestens einen örtlich variablen Kommissionierplatz auf, der eine variable relative Position innerhalb des Aktionsbereichs aufweist, die sich über die Zeit kundenauftragsabhängig immer wieder ändert, und an dem eine Rendezvous-Kommissionierung durch eine Kommissionierperson und/oder durch einen Kommissionierroboter durchgeführt wird. Die Rendezvous-Kommissionierung erfolgt kundenauftragsorientiert. Bei der Rendezvous-Kommissionierung werden Artikel aus Quellbehältern entnommen und an Zielbehälter abgegeben, und zwar einen einem variablen Ort, nämlich dem Rendezvous-Ort, wo sich Quell- und Zielbehälter treffen. Ferner weist das System eine Steuereinrichtung, wie z.B. einen Lagerverwaltungsrechner (LVR), einen Materialflussrechner (MFR), einen Rechner zum Planen einer Navigation und von Routen der Fahrzeuge, eine Auftragsverwaltung und/oder Ähnliches auf, die für die Rendezvous-Kommissionierung eingerichtet ist, indem die relative Position des variablen Kommissionierplatzes sowie zugehörige Transportaufträge für die Fahrzeuge durch die Steuereinrichtung optimiert bestimmt, erzeugt und kommuniziert werden. Die Transportaufträge für die Fahrzeuge sind durch ein zeitlich und örtlich synchronisiertes Zusammentreffen einer kundenauftragsspezifischen Anzahl von Quellbehältern und einer kundenauftragsspezifischen Anzahl von Zielbehältern am variablen Kommissionierplatz definiert.

Die Erfindung zeichnet sich durch ihren örtlich variablen Kommissionierplatz aus. Nicht nur die Quell- und Zielbehälter werden bewegt, sondern auch die Kommissionierplätze. Die variablen Kommissionierplätze können sich auch auf die Quell- und Zielbehälter zu bewegen. Die konzeptionell "beweglichen" Kommissionierplätze treffen sich mit den beweglichen Quell- und Zielbehältern, so dass es zu einem "Rendezvous" kommt. Damit verkürzen sich Wegzeiten und Auftragslaufzeiten. Das System kann mehr Aufträge innerhalb der gleichen Zeit erfolgreich bearbeiten. Die Dynamik des Systems wird gesteigert, weil sich neben den Quell- und Zielbehälter auch die Kommissionerer bewegen, sei auch nur für einen einzigen Pick, d.h. die Entnahme und Abgabe eines einzelnen Artikels.

Das System ist in der Lage flexibel auf eine schwankende Auslastung zu reagieren. Kommissionierplätze können jederzeit ergänzt oder weggenommen werden, indem mehr oder weniger Kommissionerer (Artikel-Umsetzer) ins System geschickt werden. Fördertechnisch aufwändig angeschlossene stationäre (Kommissionier-)Arbeitsstationen mit komplexer Streckenführung entfallen. Für den Betreiber des Lager- und Kommissioniersystems der Erfindung senken sich die Investitions- und Instandhaltungskosten. Der Betreiber kann dem System jederzeit Fahrzeuge hinzufügen, z.B. durch Leasing, um Belastungsspitzen abzufedern.

Vorzugsweise umfasst die optimierte Bestimmung der relativen Position sowie der Transportaufträge der Fahrzeuge eine Wegoptimierung und/oder eine Laufzeitoptimierung.

Dadurch ist es möglich, die Leistung zu steigern, weil weniger Zeit benötigt wird, die (Kunden-)Aufträge zu bearbeiten. Die Fahrzeuge sind schneller an ihrem Ziel. Die Picks können früher durchgeführt werden.

Bei einer vorteilhaften Ausgestaltung weist der variable Kommissionierplatz ferner eine äußere Begrenzung auf, die kundenauftragsspezifisch durch die Steuereinrichtung so bestimmt wird, dass alle zur Abarbeitung des jeweiligen Kundenauftrags benötigten Behälter innerhalb des variablen Kommissionierplatzes pufferbar sind.

Somit ist gewährleistet, dass der Kommissionierer nicht auf Quell- oder Zielbehälter warten muss, um die Aktionen (Entnahmen und Abgaben) am aktuellen Ort des Kommissionierplatzes durchzuführen, die die Steuereinrichtung vorab geplant hat. Die äußere Begrenzung definiert klar einen Bereich, in den andere Fahrzeuge nicht eindringen dürfen. Dadurch erleichtert sich eine Verkehrsplanung. Auch die Planung der Positionen verschiedener Kommissionierplätze relativ zu einander ist vereinfacht.

Weiter ist es von Vorteil, wenn der Lagerbereich und der Aktionsbereich unterschiedlich sind.

Hier erfolgt eine klare und strikte Trennung der Funktionen "Lager" und "Kommissionierung", was den Verkehr der Fahrzeuge flüssiger laufen lässt und leichter planbar macht. Im Lagerbereich kommt es zu keinen Staus, weil sich die Fahrzeuge dort nur zum Zwecke einer Ein- und Auslagerung der Quellbehälter aufhalten.

Bei einer weiteren besonderen Ausgestaltung ist eines der Fahrzeuge eingerichtet, die Kommissionierperson zu tragen und sicher innerhalb des Aktionsbereichs zu bewegen.

Dieser Aspekt betrifft im Wesentlichen eine manuelle Rendezvous-Kommissionierung. Die Kommissionierperson lässt sich auf dem Fahrzeug arbeitsrechtlich sicher durch den Aktionsbereich bewegen. Eine Kollisionsvermeidung wird durch das Fahrzeug selbst geregelt, so dass sich die Kommissionierperson nicht darum kümmern muss. Dies entspannt die Kommissionierperson, insbesondere bei einem hohen Verkehrsaufkommen, das üblicherweise im Aktionsbereich herrscht.

Ferner ist diese Ausgestaltung ergonomisch, weil die Kommissionierperson über die Zeit gesehen nicht zu den verschiedenen Positionen des variablen Kommmissionierplatzes laufen muss, sondern gefahren wird. Die Kommissionierperson lässt sich mit dem Fahrzeug schneller als zu Fuß zu einem gewünschten Ort bzw. einer nach Ablaufplan nächsten relativen Position des Kommissionierplatzes bringen. Positionierungsfehler sind ausgeschlossen. Die Kommissionierperson muss sich nicht innerhalb des Aktionsbereichs orientieren, so dass die kognitive Belastung wiederum verringert ist. Die Kommissionierperson kann die Fahrzeit nutzen, um zu prüfen und/oder zu (ver-)packen.

Bei einer weiteren besonderen Ausführungsform ist der Kommissionierroboter auf einem der Fahrzeuge befestigt.

Hier geht es um eine automatisierte Kommissionierung, die eine Leistungssteigerung, insbesondere bei einfach zu greifenden Gütern, hinsichtlich einer Anzahl von Picks pro Zeiteinheit mit sich bringt.

Insbesondere weist der Aktionsbereich eine feste Position innerhalb des Systems und/oder eine feste äußere Begrenzung auf.

Diese Maßnahme erleichtert die Planung der relativen Positionen der variablen Kommissionierplätze und der Transportaufträge der Fahrzeuge. Außerhalb des fixen Aktionsbereichs können sich Menschen aufhalten bzw. zu Fuß durch das System laufen, ohne der Gefahr ausgesetzt zu sein, von einem der Fahrzeuge getroffen zu werden.

Ferner wird die oben genannte Aufgabe durch ein Verfahren zum Betreiben eines Lager- und Kommissioniersystems nach einem Rendezvous-Kommissionier-Prinzip gelöst, bei dem zu kommissionierende Güter an örtlich variablen Kommissionierplätzen gemäß Kommissionieraufträgen aus Quellbehältern entnommen und in Zielbehälter abgegeben werden, wobei das System aufweist: eine Vielzahl von Fahrzeugen zum Transportieren der Quellbehälter und der Zielbehälter innerhalb des Systems; einen Lagerbereich und einen Aktionsbereich; einen örtlich variablen Kommissionierplatz, der eine variable relative Position innerhalb des Aktionsbereichs aufweist, die sich über die Zeit kundenauftragsabhängig immer wieder ändert; und eine Steuereinrichtung, die für eine Planung und Ausführung der Rendezvous-Kommissionierung eingerichtet ist; wobei das Verfahren aufweist: Analysieren einer Vielzahl von Kundenaufträgen, insbesondere nach den Kriterien: Quellbehälterorten, Zielbehälterorten und/oder einem Batch-Potential der Kundenaufträge; Auswählen einer (optimalen) relativen Position für den variablen Kommissionierplatz und Bestimmen von Transportaufträgen für die Fahrzeuge, wobei die Transportaufträge für die Fahrzeuge ein zeitlich und örtlich synchronisiertes Zusammentreffen ("Rendezvous") einer kundenauftragsspezifischen Anzahl der Quellbehälter und einer kundenauftragsspezifischen Anzahl der Zielbehälter an der ausgewählten relativen Position des variablen Kommissionierplatzes definieren; und Durchführen der Transportaufträge und der Kommissionierung am variablen Kommissionierplatz.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: eine Draufsicht auf ein exemplarisches Lager- und Kommissioniersystem gemäß der Erfindung;
- Figur 2: ein Blockdiagramm einer Kommissioniersteuerung;
- Figur 3: eine isolierte Darstellung eines Aktionsbereichs der Fig. 1;
- Figur 4: einen Datensatz in tabellarischer Form; und
- Figur 5: ein Flussdiagramm gemäß der Erfindung zum Betreiben eines Lager- und Kommissioniersystems nach dem Rendezvous-Kommissionierprinzip.

In der nachfolgenden Beschreibung werden ähnliche Elemente, Komponenten, Teile und Merkmale mit ähnlichen Bezugszeichen versehen, wobei die hier enthaltenen Offenbarungen sinngemäß auf ähnliche Elemente, Komponenten, Teile und Merkmale mit ähnlichen Bezugszeichen übertragen werden können. Lageangaben, wie z.B. "oben", "unten", "seitlich", "vertikal", "horizontal" und dergleichen, sind auf die unmittelbar beschriebene(n) Figur(en) bezogen und bei einer Lage- oder Positionsänderung sinngemäß auf die neue Lage bzw. Position zu übertragen.

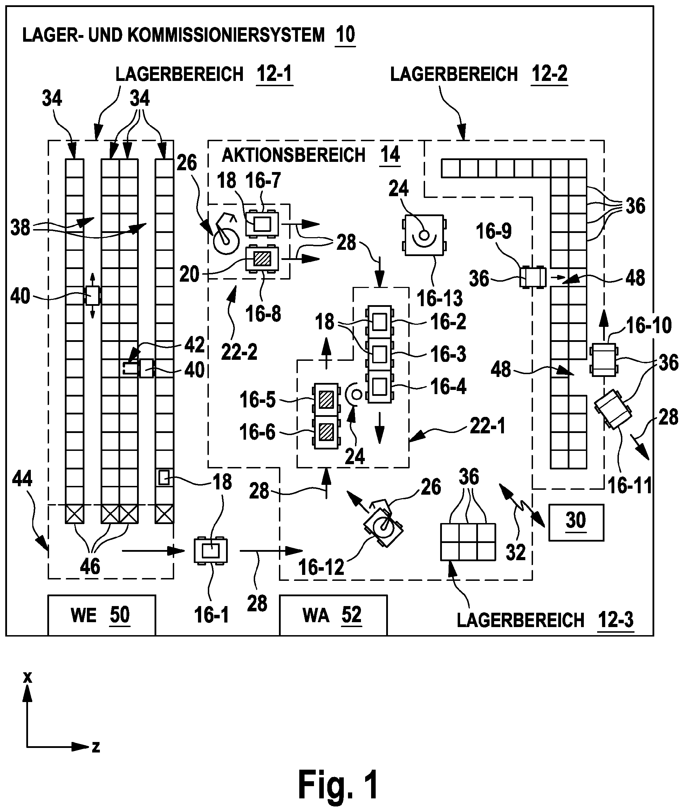

Ferner ist zu beachten, dass Richtungsangaben und Orientierungen zugrunde gelegt werden, die sich grundsätzlich an die in der (Intra-)Logistik üblichen Bezeichnungen anlehnen. Folglich werden eine Längsrichtung mit "X", eine Querrichtung mit "Z" und eine Höhenrichtung mit "Y" bezeichnet. Exemplarisch kann der Fig. 1 ein damit korrespondierendes (z.B. kartesisches) Koordinatensystem XYZ entnommen werden.

Wenn nachfolgend der Ausdruck "Anzahl von Objekten" verwendet wird, so dieser Ausdruck allgemein so zu verstehen, dass sowohl ein einziges Objekt als auch eine Mehrzahl der Objekte umfasst sein können.

Nachfolgend werden zu kommissionierende Güter (d.h. Artikel, Waren, Gebinde, etc.) üblicherweise in Form von sogenannten (Lager-)Bestandseinheiten ("SKU", Storage Keeping Unit) in einem Lager bevorratet. Die Erfindung ist eingerichtet, ein "Batch-Picking" durchzuführen. Beim Batch-Picking werden mehrere Kunden- bzw. Kommissionieraufträge gleichzeitig abgearbeitet.

Ein "Kommissionier- bzw. Kundenauftrag" liegt üblicherweise als Datensatz vor. Nachfolgend wird allgemein von "Aufträgen" gesprochen. Jeder Auftrag kann ein Kopffeld, ein Prioritätsfeld und/oder ein Artikelfeld aufweisen. Das Kopffeld kann unter anderem Informationen zu den Kunden, die eine Bestellung aufgegeben (z.B. Kunden-Adressen), oder Kunden-Identifikationsnummern sowie Bestell-/Auftragsnummern aufweisen. Das Prioritätsfeld enthält Angaben darüber, ob es sich um einen normalen Auftrag oder um einen Eilauftrag handelt. Ein Eilauftrag ist ein Auftrag mit hoher (Bearbeitungs-)Priorität, der üblicherweise vorrangig vor normalen Aufträgen behandelt wird. Ein Auftrag umfasst ferner einen oder mehrere Auftragszeilen. Jede Auftragszeile spezifiziert eine Anzahl eines zu kommissionierenden Artikels bzw. Artikeltyps. Die Artikel werden üblicherweise als Stückgüter (Piece Picking) und/oder Gebinde (Case Picking) bereitgestellt.

Beim "Batch-Picking" werden mehrere Aufträge artikelorientiert zusammengefasst, um möglichst wenige SKU aus dem Lager auszulagern zu müssen und nach einer erfolgten Kommissionierung in das Lager zurückbewegen zu müssen. Während einer entsprechenden artikelorientierten Analyse der Aufträge wählt man auf eine Gruppen von Kundenaufträgen aus, die alle Bestellungen (Auftragszeilen) enthalten, die einen gleichen Artikeltyp betreffen, und erzeugt dann artikelorientierte Transportbefehle für die SKU. Die SKU, die diesem Artikeltyp entspricht, wird dann ausgelagert und zur Kommissionierstation bzw. zum Kommissionierplatz transportiert. Am Kommissionierplatz entnimmt der Kommissionierer alle Artikel des jeweiligen Artikeltyps, d.h. die Entnahme erfolgt artikelorientiert, und gibt sie in einer auftragsspezifisch vorgegebenen Anzahl in den oder die entsprechend vorgesehenen Auftragsbehälter ab. Jedem Auftragsbehälter ist einer der Kommissionieraufträge zugeordnet, so dass die Abgabe der Artikel auftragsorientiert erfolgt. Die Auftragsbehälter werden konventionell so lange am Kommissionierplatz vorgehalten, bis alle Artikeltypen des Kommissionierauftrags in den bzw. die zugehörigen Auftragsbehälter abgegeben wurden. Dies konnte bisher zu einem Auftragsbehälterstau am Kommissionierplatz führen.

Fig. 1 zeigt schematisch eine Draufsicht auf ein Lager- und Kommissioniersystems 10 gemäß der Erfindung, das nachfolgend kurz auch lediglich als "System 10" bezeichnet werden wird. Es versteht sich, dass die in der Fig. 1 gezeigten Komponenten des Systems 10 nicht abschließend zu verstehen sind. Ferner versteht es sich, dass das System 10 der Fig. 1 aus anderen Komponenten, mehr Komponenten oder weniger Komponenten als den gezeigten Komponenten aufgebaut sein kann.

Allgemein umfasst das System 10 einen Lagerbereich 12, einen Aktionsbereich 14 und eine Vielzahl von Fahrzeugen 16. Das System 10 zeichnet sich durch eine sehr hohe Dynamik aus, die sich insbesondere dadurch ausdrückt, dass die Fahrzeuge 16 materialflusstechnische Quelle und gleichzeitig auch materialflusstechnische Senken so transportieren bzw. bewegen, dass sich die zusammengehörenden Quellen und Senken zum richtigen Zeitpunkt am richtigen Ort innerhalb des Systems treffen, wobei die Zusammengehörigkeit durch Kundenaufträge bestimmt ist, wie es unten noch genauer erläutert werden wird. Dass sich die Quellen und Senken zur richtigen Zeit am richtigen Ort treffen, stellt das Ergebnis eines oder mehrerer intralogistischer Optimierungsprozessen dar, wie es ebenfalls weiter unten noch genauer erläutert werden wird.

Die Bereiche 12 und 14 sind in der Fig. 1 jeweils mit einer Strichlinie umrandet. Die Bereiche 12 und 14 stellen Flächen dar, z.B. in einem hier nicht näher gezeigten Gebäude. In bzw. auf diesen Flächen werden allgemein bekannte Funktionen (Lager, Wareneingang, Warenausgang, Kommissionierung, etc.) eines Intralogistiksystems (z.B. eines Distributionszentrum) realisiert. Der bzw. die Lagerbereiche 12 dienen im Wesentlichen einer Bevorratung von zu kommissionierenden Gütern, die können aber auch zur Bevorratung von Auftrags- und Versandbehältern benutzt werden. Der bzw. die Aktionsbereiche 14 (Fig. 1 zeigt exemplarisch nur einen einzigen Aktionsbereich 14) dienen im Wesentlichen einer Kommissionierung, d.h. einer Umverteilung der zu kommissionierenden Güter gemäß Aufträgen, und als Fahrbereich für die Fahrzeuge 16. Die Fahrzeuge 16 wickeln im Wesentlichen einem Material- bzw. Güterfluss innerhalb des Systems 10 ab, der ergänzend auch durch Steigförderer unterstützt werden kann. Die Fahrzeuge 16 können ergänzend zum Gütertransport auch zum Bewegen einer Kommissionierperson 24 oder eines Kommissionierroboters 26 eingesetzt werden, wie es nachfolgend noch näher erläutert werden wird.

In der Fig. 1 sind exemplarisch drei Lagerbereiche 12-1 bis 12-3 gezeigt, die exemplarisch getrennt voneinander innerhalb des Systems 10 positioniert sind. Es versteht sich, dass mehr oder weniger Lagerbereiche 12 vorgesehen werden können, die ggf. auch zusammenhängen können. Exemplarisch ist ein einziger Aktionsbereich 14 gezeigt, der vorzugsweise zentral in Bezug auf die Lagerbereiche 12 innerhalb des Systems 10 angeordnet ist. Es können auch mehrere Aktionsbereiche 14 vorgesehen werden. Der gezeigte Aktionsbereich 14 stellt exemplarisch eine zusammenhängende Fläche dar, die den Lagerbereich 12-3 exemplarisch umschließt. Es versteht sich, dass der Aktionsbereich 14 ebenfalls aus mehreren, voneinander getrennten Flächen definiert werden kann. Der Lagerbereich 12-1 ist exemplarisch beabstandet zum Aktionsbereich 14 angeordnet. Der Lagerbereich 12-2 grenzt unmittelbar an den Aktionsbereich 14 an. Der Lagerbereich 12-3 ist innerhalb des Aktionsbereichs 14 angeordnet bzw. wird vom Aktionsbereich 14 umgeben. Hier sind Planer (z.B. Layout-Ersteller) von Systemen 10 vollkommen frei, Positionen, Abmessungen und Grenzen von Kommissionierbereichen, wie z.B. die Lagerbereiche 12-1 bis 12-3 und den Aktionsbereich 14, zu definieren. Bereiche können einander überlappen. Ferner versteht es sich, dass der Aktionsbereich 14 die gesamte verbleibende Fläche des Systems 10 umfassen kann, die nicht von anderen Komponenten, wie z.B. den Lagerbereichen 12, benötigt wird. Der Aktionsbereich 14 dient im Wesentlichen als Fahrbereich für die Fahrzeuge 16, die Quellbehälter 18 und Zielbehälter 20 zu und von einem oder mehreren Kommissionierplätzen 22. Die Kommissionierplätze 22 sind innerhalb des Aktionsbereichs 14 positioniert. In der Fig. 1 sind exemplarisch zwei Kommissionierplätze 22-1 und 22-2 gezeigt, die zur Verdeutlichung in der Fig. 1 jeweils ebenfalls von einer Strichlinie umrandet sind.

Die Kommissionierstationen bzw. -plätze 22 umfassen u.a. Orte bzw. Positionen, Räume und/oder Flächen, wo eine manuelle Kommissionierung durch Kommissionierpersonen 24 (siehe Kommissionierplatz 22-1) oder eine automatisierte Kommissionierung mittels Kommissionierrobotern 26 (siehe Kommissionierplatz 22-2) erfolgt. Falls erforderlich umfassen die Kommissionierplätze 22 weitere (physische) Elemente, wie z.B. Tische, Verpackungsmaterialien, Werkzeuge und Ähnliches, die zum Durchführen des eigentlichen Kommissioniervorgangs (Entnahme und Abgabe von Gütern) unterstützend benötigt werden. Unter "Kommissionieren" wird nachfolgend vereinfachend ein Prozess verstanden, bei dem die zu kommissionierenden Güter in Übereinstimmung mit einem oder mehreren Aufträgen aus Quellbehältern 18 entnommen werden und dann in zugehörige Zielbehälter 20 abgegeben werden. Jeder (Kommissionier-)Auftrag kann in mehrere Teilaufträge aufgeteilt werden, z.B. indem jedem Teilauftrag ein eigener Zielbehälter 20 zugeordnet wird, so dass die Güter eines einzigen Auftrags separat in mehreren Zielbehältern 20 zumindest gesammelt werden.

Die Quellbehälter 18 können beispielsweise durch artikelrein bestückte Lagerbehälter realisiert sein. Dies bedeutet, dass ein entsprechender Quellbehälter 18 ausschließlich Artikel eines einzigen Artikeltyps enthält. Alternativ und ergänzend können die Quellbehäl-ter 18 "fachunterteilt" sein. Dies bedeutet, dass ein entsprechender Quellbehälter 18 in mehrere Fächer aufgeteilt ist, die vorzugsweise wiederum artikelrein bestückt sind. Außerdem ist es möglich, die Quellbehälter 18 mit Artikel von zwei oder mehreren Artikeltypen ohne Fachunterteilung zu verwenden, wo also einige wenige, ausgewählte Artikeltypen chaotisch durchmischt zwecks Füllgradoptimierung der Quellbehälter 18 bevorratet werden.

Die Zielbehälter 20 können beispielsweise durch sogenannte Auftragsbehälter realisiert sein. Den Zielbehältern 20 werden die Aufträge zur Abarbeitung zugeordnet. In den Zielbehältern werden die Güter auftragsorientiert gesammelt.

Es versteht sich, dass der hier verwendete Begriff "Behälter" nicht einschränkend zu verstehen ist. Der Begriff "Behälter" umfasst auch andere Ladungsträgertypen als Behälter, wie z.B. Paletten, Tablare, Kartons, Gitterwägen und Ähnliches. Dies gilt sowohl für die Quellbehälter 18 als auch für die Zielbehälter 20.

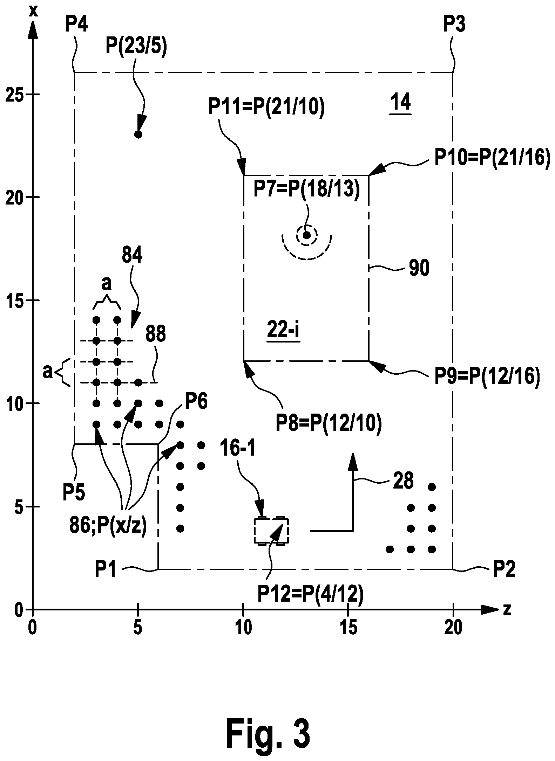

Die Fahrzeuge 16 sind autonom innerhalb des Systems 10 verfahrbar. Unter dem Begriff "autonomes Fahren", der manchmal auch als automatisches Fahren, automatisiertes Fahren oder pilotiertes Fahren bezeichnet wird, ist allgemein die Fortbewegung von (Kraft-)Fahrzeugen, mobilen Robotern und fahrerlosen Transportsystemen zu verstehen, die sich weitgehend autonom verhalten. Bei der vorliegenden Erfindung ist das autonomes Fahren mit den Fahrzeugen 16 assoziiert, die sich ähnlich wie Flugzeuge im Autopilotmodus verhalten, also Lenk-, Beschleunigungs- und Bremsmanöver längs- und quer einer Fahrspur ohne menschliches Eingreifen durchführen. Die Fahrzeuge 16 können eingerichtet sein, sich innerhalb eines, vorzugsweise fest definierten, Gebiets, wie z.B. innerhalb des Aktionsbereichs 14, ihre Route selbständig zu suchen. Die Fahrzeuge 16 sind selbstständig und unabhängig. Die Fahrzeuge 16 können bis zu einem gewissen Grad selbst Entscheidungen hinsichtlich ihrer Route bzw. ihres Fahrwegs treffen. Eine Navigation und Führung der Fahrzeuge 16 kann beispielsweise basierend auf Wegpunkten 86 (vgl. Fig. 3) erfolgen, die, vorzugsweise gleichmäßig verteilt, auf einem Hallenboden vorgesehen sind, wie es nachfolgend noch näher beschrieben werden wird.

Die Fahrzeuge 16 sind vorzugsweise als fahrerlose Transportfahrzeuge realisiert, wie sie exemplarisch in den deutschen Patentanmeldungen DE 10 2014 111 385 (Weasel-3D-Matrix), DE 10 2014 111 396 (Be-/Entladung Weasel), DE 10 2014 111 394 (Dynamische Sequenzverschiebung), DE 10 2015 114 370 (versetzte Achsen), DE 10 2015 114 393 (Transferplätze) und DE 10 2015 114 410 (Weasel-Logimat) beschrieben sind. Die Transportfahrzeuge 16 sind u.a. für den Transport einer oder mehrerer der nachfolgend genannten Komponenten eingerichtet: Quellbehälter 18, Zielbehälter 20, Kommissionierpersonen 24 und/oder Kommissionierroboter 26. Die Fahrzeuge 16 sind hinsichtlich zu transportierender Objekte universal einsetzbar. Die Fahrzeuge 16 können sich hinsichtlich ihrer Abmessungen und Leistungen (Geschwindigkeit, Transportkapazität, Fahrdauer bzw. Fahrkapazität, etc.) unterscheiden.

In der Fig. 1 sind unterschiedliche Fahrrichtungen der Fahrzeuge 16 exemplarisch als dunkle Pfeile 28 verdeutlicht. Die Fahrzeuge 16 besorgen im Wesentlichen den Material- bzw. Güterfluss im System 10. Sofern ein Wareneingang (WE) 50 und/oder ein Warenausgang (WA) 52 vorgesehen sind, erledigen die Fahrzeuge 16 auch den Materialfluss von und zum Wareneingang 50 bzw. Warenausgang 52.

Sowohl der Materialfluss als auch eine Steuerung der Fahrzeuge 16 (z.B. Navigation, Routenplanung, Verkehrsregelung, etc.) werden von einer Steuereinrichtung 30 bzw. einer Subeinheit davon durchgeführt, auf die nachfolgend noch näher eingegangen wird. Die Steuereinrichtung 30 ist in der Fig. 1 exemplarisch als eine einzige zentrale Einheit implementiert. Es versteht sich, dass die Steuereinrichtung 30 auch dezentral organisiert sein kann. Die Steuereinrichtung 30 ist durch eine oder mehrere Datenverarbeitungsanlagen (Computer, Server, Hosts, etc.) implementiert. Die Steuereinrichtung 30 kann als Hardware und/oder Software implementiert sein.

Die Steuereinrichtung 30 ist ferner eingerichtet, vorzugsweise drahtlos (vgl. Doppelpfeil 32 in Fig. 1), mit den verschiedenen Komponenten des Systems 10, insbesondere mit den Fahrzeugen 16, zu kommunizieren.

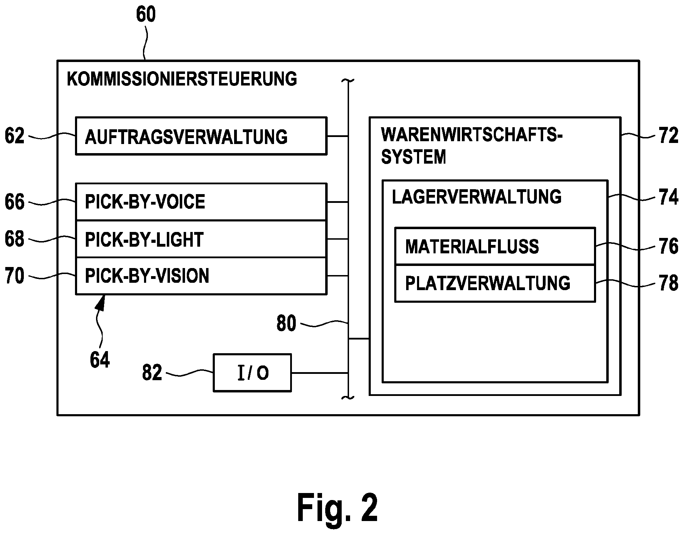

Die Steuereinrichtung 30 kann Prozessoreinheiten, Rechner, Server, speicherprogrammierbare Steuerungen (SPS), Speichereinheiten, Kommunikationseinheiten, Eingabe-/Ausgabe-Einheiten und/oder Anzeigeeinheiten umfassen. Die Prozessoreinheiten dienen dazu, Befehle ablaufen zu lassen, die in den Speicher geladen werden können oder bereits im Speicher vorhanden sind. Die Prozessoreinheiten können jeweils eine Anzahl von Prozessoren, Multiprozessoren oder andere Typen von Prozessoren umfassen. Die Speichereinheiten sind eingerichtet, Informationen zu speichern, wie z.B. Daten, Programme in funktionaler Form oder irgendeine andere geeignete Information. Die Eingabe-/Ausgabe-Einheiten ermöglichen eine Eingabe und Ausgabe von Daten in bzw. aus anderen Vorrichtungen, die mit der Datenverarbeitungsanlage verbunden sein können. Die Eingabe-/Ausgabe-Einheiten können z.B. eine Tastatur, eine Maus oder Ähnliches umfassen. Befehle für ein Betriebssystem, Anwendungen und/oder Programme können sich in den Speichereinheiten befinden, die mit den Prozessoreinheiten z.B. über ein Kommunikationsnetz 80 (siehe in Fig. 2) in Verbindung stehen. Die oben erwähnten Komponenten der Datenverarbeitungsanlage sind nicht abschließend zu verstehen. Die Steuereinrichtung 30 kann unter Verwendung jeder Hardware oder jedes Systems implementiert werden, das zum Ausführen eines Programmcodes bzw. einer Anwendung fähig ist.

Fig. 2 zeigt ein Blockdiagramm einer exemplarischen Kommissioniersteuerung 60. Die Kommissioniersteuerung 60 der Fig. 2 ist zumindest teilweise von der Steuereinrichtung 30 der Fig. 1 umfasst. Die Kommissioniersteuerung 60 der Fig. 2 ist modular, vorzugsweise verteilt, aufgebaut. Die Kommissioniersteuerung 60 kann aufweisen: eine Auftragsverwaltung 62, (Kommissionier-)Leitstrategien 64 (wie z.B. Pick-by-Voice 66, Pick-by-Light 68, Pick-by-Vision 70 oder Ähnliches), ein Warenwirtschaftsystem 72, das wiederum eine Lagerverwaltung 74 (z.B. in Form eines Lagerverwaltungsrechners (nicht gezeigt)) aufweist, die üblicherweise wiederum einen Materialfluss 76 sowie eine (Lager- oder Speicher-)Platzverwaltung 78 regelt, ein Kommunikationsnetz 80 und/oder eine Schnittstellenverwaltung 82. Die Module 62 bis 82 sind üblicherweise in Form von Hardware und/oder Software implementiert. Die verschiedenen Module 62 bis 82 können über das Kommunikationsnetz 80 (z.B. ein oder mehrere Kommunikationsbusse) miteinander kommunizieren. Für den Materialfluss 76 kann ein eigener Materialflussrechner (MFR, nicht dargestellt) vorgesehen sein.

Die Auftragsverwaltung 62 sorgt unter anderem dafür, dass eingehende Auftrage gesammelt und analysiert werden, um die Lagerbereiche 12 entsprechend zu bestücken. Dabei können Faktoren, wie z.B. Auslastung, Sortiment, Wegoptimierung und Ähnliches, eine Rolle spielen. Den Kommissionierplätzen 22 können durch die Auftragsverwaltung komplette Aufträge, aber auch nur Teilaufträge, zur Abarbeitung zugewiesen werden. Eine weitere Aufgabe der Auftragsverwaltung 62 ist es, die Kommissionierplätze 22 innerhalb des Aktionsbereichs 14 örtlich, zeitlich und geometrisch dynamisch zu verwalten. Dies bedeutet, dass die Kommissionierplätze 22 je nach Auftragslage ihre Position und räumliche Abmessung ändern, um eine mehrfache Optimierung, z.B. hinsichtlich einer Laufzeit (kürzeste Zeit) und einem Weg (kürzester Weg), zu erzielen, wie es nachfolgend noch näher erläutert werden wird. Ferner können die Aufträge hinsichtlich ihrer Abarbeitung unterschiedlich stark gewichtet werden, wie z.B. Eilaufträge, die besonders schnell abgearbeitet werden müssen.

Die Laufzeit-Optimierung kann mehrere Aspekte tangieren, wie z.B. eine Auftragsdurchlaufzeit bzw. Durchlaufzeit. Die Auftragsdurchlaufzeit leitet sich aus den Teilzeiten der beteiligten Funktionsbereiche und Arbeitsplätze ab. Hierbei kann zwischen physischen und informationstechnischen Vorgängen unterschieden werden. Die Durchlaufzeit ist die Zeit zwischen dem Eingang eines Auftrags und seiner Erledigung.

Unter einer "Wegoptimierung" bzw. einer "Trip-Optimierung" versteht man klassisch Einoder Auslagerungsstrategien, bei denen ein möglichst kurzer Transportweg vom (stationären) Lager zur (stationären) Kommissionierstation berechnet wird, insbesondere wenn es mehrere möglichen Quellen (z.B. Regalstellplätze) innerhalb des Lagers bzw. mehrere stationäre Kommissionierstationen gibt, zwischen denen die Güter eines Auftrags hin- und her zu transportieren sind. Üblicherweise werden dabei keine von Artikeln oder Lagereinheiten abhängigen Größen berücksichtigt. Das Problem der Berechnung des kürzesten Weges wird auch als "Travelling-Salesman-Problem" bezeichnet, siehe auch "Branch and Bound", "Greedy-Verfahren", "Mäander-Heuristik" oder "Largest-Gap-Heuristik" (Quelle: www.logipedia.de).

Generelle Ziele der Optimierung bei der vorliegenden Erfindung sind: mit einem gegebenen Aufwand das bestmögliche Ergebnis zu erreichen; mit einem minimalen Aufwand ein definiertes Ergebnis zu erreichen; und/oder das bestmögliche Ergebnis mit geringsten Aufwand zu erreichen. Dazu werden z.B. die Fahrzeuge 16, die Kommissionierpersonen 24 und die Kommissionierroboter 26 gleichmäßig ausgelastet, ohne dass unproduktive Stillstandzeiten entstehen. Leerfahrten der Fahrzeuge 16 sind zu vermeiden.

Ein weiteres Lösungselement dieses Optimierungsproblems ist darin zu sehen, dass die Positionen und Abmessungen der Kommissionierplätze 22 (insbesondere ein Raum bzw. eine Fläche, innerhalb dem bzw. der die Fahrzeuge 16 bis zur Bearbeitung, d.h. bis zur Entnahme bzw. Abgabe der Güter, verweilen) innerhalb des Aktionsbereichs 14 permanent variiert werden (können). Beim klassischen Ansatz sind zumindest die Entnahme- und/oder Abgabepositionen zeitlich und örtlich fest definiert. Ein klassischer Kommissionierplatz bewegt sich nicht, d.h. verändert seine Position innerhalb des Gesamtsystems nicht. Bei der vorliegenden Erfindung können und sollen sich neben den Behältern 18 und 20 auch die Kommissionierpersonen 24 oder Kommissionierroboter 26 bewegen, weil sich die Kommissionierplätze 22 "bewegen", indem sie über die Zeit ihre Positionen ändern. Dies bedeutet mit anderen Worten, dass sich nicht nur die materialflusstechnischen Quellen (Quellbehälter 18), sondern auch die Senken (Kommissionierplätze 22) innerhalb des Systems "bewegen" bzw. örtlich/zeitlich verändern, was einen zusätzlichen Freiheitsgrad bei der generellen Ablaufplanung darstellt, der bei konventionellen Ansätzen nicht gegeben ist.

Beispielsweise kann sich eine der Kommissionierpersonen 24 von einem ersten Kommissionierplatz 22-i zu einem zweiten, anderen Kommissionierplatz 22-j bewegen. In diesem Fall kann sich der zweite Kommissionierplatz 22-j z.B. noch im Aufbau befinden, während sich die Kommissionierperson 24 dort hin bewegt. Gleichzeitig könnte sich der erste Kommissionierplatz 22-i möglicherweise schon wieder auflösen.

Diese Dynamik der variablen Kommissionierplätze 22 wirkt sich insbesondere auf eine operative Planung aus, d.h. auf eine Disposition täglich abzuwickelnder (Transport-) Abläufe, wie z.B. den Transport der Quell- und Zielbehälter 18 und 20. Dieser Optimierungsfreiheitsgrad kann sich ferner auf eine Ressourcenzuordnung (Quellbehälter 18 - Zielbehälter 20 - Kommissionierer 24 bzw. 26) sowie eine Terminierung und Reihenfolgeplanung der Transportaufträge für die Fahrzeuge 16 auswirken (Quellbehälter 18 trifft Zielbehälter 20 wann und wo, und umgekehrt?). Auch eine Routenplanung für die Fahrzeuge 16 kann davon beeinflusst werden, da sich eine Topologie des Aktionsbereichs 14 ständig ändert, weil ein Kommissionierplatz 22 in einem ersten Moment z.B. störend für eine Fahrzeugroute ist und in einem zweiten, späteren Moment aber gar nicht mehr vorhanden ist. Ferner kann sich die Optimierung auf eine Batch-Planung auswirken bzw. dadurch beeinflusst werden, z.B. indem ein Quellbehälter 18 Kommissionierplätze 22 anfährt, die zum Zeitpunkt des Eintritts dieses Quellbehälters 20 in den Aktionsbereich 14 noch gar nicht existieren.

Die Beweglichkeit der Kommissionierplätze 22 innerhalb des Aktionsbereichs 14 ist Ausdruck der sogenannten "Rendezvous-Kommissionierung". Bei der Rendezvous-Kommissionierung bewegen sich nicht nur die Quellen, sondern auch die Senken. Bei der Rendezvous-Kommissionierung gilt es, die relative Position des Kommissionierplatzes 22 unter Abwägung einer Vielzahl von Faktoren auftragsspezifisch zu optimieren. Einige dieser Faktoren sind oben bereits näher beschrieben worden.

Zusätzlich können die relative Position des Aktionsbereichs 14 innerhalb des Systems und in Bezug auf die Lagerbereiche 12 sowie die Abmessungen des Aktionsbereichs 14 jederzeit verändert werden.

Zurückkehrend zu den Fahrzeugen 16 der Fig. 1 wird nachfolgend ein exemplarischer Materialfluss zwischen den Bereichen 12 und 14 genauer beschrieben. Ein Fahrzeug 16-1 transportiert einen Quellbehälter 18 aus dem Lagerbereich 12-1 in den Aktionsbereich 14. Der Lagerbereich 12-1 umfasst beispielsweise vier stationär fixe Regale 34, wobei jeweils zwei der Regale 34 eine Regalgasse 38 zwischen sich definieren, in denen wiederum z.B Einebenen-Regalbediengeräte (z.B. Shuttle, wie in der Patentanmeldung DE 10 2015 101 948 beschrieben (Tiefenauflage)) 40 längs der Regale 34 verfahrbar sind, um mit ihren Lastaufnahmemitteln 42 Quell- und/oder Zielbehälter 18 bzw. 20 ein- und/oder auszulagern. Stirnseitig können die Regale (materialflusstechnisch) an Vertikalförderer 46 gekoppelt sein, die wiederum in einem Vorzonenbereich 44 angeordnet sind, der hier z.B. an den Lagerbereich 12-1 unmittelbar angrenzt. Die Vertikalförderer 46 dienen (ausschließlich) einem vertikalen Transport der Behälter 18 bzw. 20. Eine entsprechende Regalanordnung, die die Regale 34 und die Vertikalförderer 46 umfasst, ist exemplarisch in dem deutschen Gebrauchsmuster DE 20 2014 100 476 U1 (Liftanordnung in Vorzone) beschrieben. Alternativ und/oder ergänzend könnte der Lagerbereich 12-1 auch eine Vielzahl von regalintegrierten Vertikalförderern 46 (nicht gezeigt) aufweisen, wobei man dann auf den Vorzonenbereich verzichten könnte, indem man die Regale 34 z.B. über eine Fahrzeug-Ebene versorgt, die unter, über oder durch die Regale 34 verläuft.

Die Lagerbereiche 12-1 bis 12-3 dienen vorzugsweise einer Bevorratung von Quellbehäl-tern 18. Die Lagerbereiche 12-1 bis 12-3 stellen in diesem Sinne Quellen dar. Es versteht sich, dass in den Lagerbereichen 12-1 bis 12-3 (simultan) auch Zielbehälter 20 bevorratet werden können. In diesem Fall stellen die Lagerbereiche 12-1 bis 12-3 auch Zielbehälter-Quellen dar. Alternativ können die Zielbehälter 20 auch in einem (nicht gezeigten) separaten Depot für, vorzugsweise leere, Zielbehälter 20 zentral oder dezentral bevorratet werden. Sobald einem leeren Zielbehälter 20 ein Kommissionierauftrag bzw. Teilauftrag datentechnisch durch die Auftragsverwaltung 62 zugewiesen ist, kann der entsprechende Zielbehälter 20 mittels einem oder mehrerer der Fahrzeuge 16, das bzw. die ebenfalls diesem Auftrag zugewiesen wird, abgeholt werden und zu einem zugeordneten Kommissionierplatz 22 zwecks Befüllung mit Artikeln verbracht werden. Entsprechend werden dem Auftrag Quellbehälter 18 zugewiesen, denen wiederum Fahrzeuge 16 zugewiesen werden. Auch wird dem Auftrag einer der Kommissionierplätze 22 zugewiesen, wobei eine Position und Abmessung dieses Kommissionierplatzes 22 auftragsspezifisch (und dynamisch) vorab bestimmt wird, insbesondere im Lichte der oben beschriebenen Optimierungsprozesse.

Der in der Fig. 1 gezeigte Kommissionierplatz 22-1 wird manuell von einer Kommissionierperson 24 betrieben. Die Fig. 1 zeigt eine Momentaufnahme, in welcher sich der Kommissionierplatz 22-1 relativ zentral innerhalb des Aktionsbereichs 14 befindet. Innerhalb des Kommissionierplatzes 22-1 sind drei weitere Fahrzeuge 16-2 bis 16-4 gezeigt, die dort Quellbehälter 18 zwecks einer auftragsorientierten Entnahme von Artikeln andienen. Der Kommissionierplatz 22-1 der Fig. 1 umfasst ferner zwei weitere Fahrzeuge 16-5 und 16-2, die die entsprechenden Zielbehälter 20 zur Kommissionierperson 24 zwecks Befüllung mit den Artikeln aus den angedienten Quellbehältern 18 andienen.

Der Kommissionierplatz 22-2 der Fig. 1 wird automatisiert durch einen Kommissionierroboter 26 betrieben. Dem Kommissionierroboter 26 wird innerhalb des Kommissionierplatzes 22-2 ein Quellbehälter 18 mittels eins weiteren Fahrzeugs 16-7 angedient. Gleichzeitig wird dem Kommissionierroboter 26 ein zugehöriger Zielbehälter 20 mittels eines weiteren Fahrzeugs 16-8 angedient.

Wie bereits erwähnt, zeigt die Fig. 1 lediglich eine Momentaufnahme. Sobald die Kommissionierperson 24 bzw. der Kommissionierroboter 26 alle Aktionen (Entnahme/ Abgabe von Artikeln) durchgeführt hat, die diesem Kommissionierplatz zugewiesen sind, können sich die Kommissionierperson 24 und der Kommissionierroboter 26 zu einem anderen "neuen" Kommissionierplatz 22 bewegen, der an einer anderen Position innerhalb des Aktionsbereichs 14 lokalisiert sein kann und der ggf. eine andere räumliche Abmessung aufweist, wie es nachfolgend noch näher beschrieben werden wird. Bei dem neuen Kommissionierplatz 22 kann es sich auch um den Kommissionierplatz 22-1 handelt, der lediglich an einen anderen Ort innerhalb des Aktionsbereichs 14 "gewandert" ist.

Im Beispiel der Fig. 1 ist die Kommissionierperson 24, die sich beim Kommissionierplatz 22-1 befindet, zu Fuß unterwegs. Alternativ können die Kommissionierpersonen 24 generell auch mit den Fahrzeugen 16 mitfahren, wie es exemplarisch für das Fahrzeug 16-13 angedeutet ist. Das Fahrzeug 16-3 kann an die Bedürfnisse der Kommissionierperson 24 angepasst sein. Dies bedeutet, dass das Fahrzeug 16-3 z.B. eine Plattform aufweisen kann, die mit einem Geländer oder Schutzzaun und ggf. einem Tisch und/oder Ähnlichem versehen sein kann. In diesem Fall kann sich die Kommissionierperson 24 ergonomisch bewegen, weil sie durch das System 10 gefahren wird, und insbesondere arbeitstechnisch sicher bewegen kann, weil Kollisionen zwischen der Kommissionierpersonen 24 und anderen Fahrzeugen 16 vermieden werden, die die Behälter 18 und 20 transportieren.

Ein weiterer Vorteil ist darin zu sehen, dass die Kommissionierperson 24 auf unterschiedlichen Seiten aktiv werden kann. Im Falle einer rechteckigen Plattform des Fahrzeugs 16 bestehen vier Möglichkeiten, die Quellbehälter 18 und die Zielbehälter 20 anzudienen. Es versteht sich, dass sich eine Zuordnung der Art "Plattformseite - Behältertyp" dynamisch ändern kann, was einen weiteren Freiheitsgrad bei der Planung und Optimierung der Abarbeitung der Kundenaufträge und bei der Erzeugung der Transportaufträge für die Fahrzeuge 16 darstellt. Vorzugsweise sind derartige Kommissionierplätze 22 ferner mit Lampen, Displays, Lautsprechern, Headsets oder Ähnlichem ausgestattet, um der Kommissionierperson einen Ort der Entnahme und Abgabe der Güter sowie die Anzahl der zu transferierenden Güter mitzuteilen.

Außerdem ist es z.B. möglich, dass zwei unterschiedliche Kommissionierpersonen 24 simultan, z.B. von links und rechts oder von oben und unten, auf den gleichen Quellbehäl-ter 18 zugreifen, um unterschiedliche Kundenaufträge an unterschiedlichen Kommissionierplätzen 22 zu bearbeiten, die sich in diesen Fall in diesem speziellen Quellbehälter 18 überlappen.

Es versteht sich, dass das oben Gesagte auch für die Kommissionierroboter 26 analog gilt. Auch die Kommissionierroboter 26 können auf den Fahrzeugen 16 montiert sein, wie es exemplarisch für das Fahrzeug 16-12 gezeigt ist. Die Fahrzeuge 16 können ferner zum Transportieren von mobilen Regalen 36 eingesetzt werden, die in der Fig. 1 exemplarisch in den Lagerbereichen 12-2 und 12-3 bevorratet sind. In der Fig. 1 transportieren die Fahrzeuge 16-9 bis 16-11 beispielsweise jeweils eines der mobilen Regale 36 von und zum Lagerbereich 12-2.

In der Fig. 1 sind die mobilen Regale 36 im Lagerbereich 12-2 (in der Draufsicht) L-förmig angeordnet. Der entsprechende L-förmige Regalblock weist hier exemplarisch Leerstellen 48 auf, die durch die Entfernung einzelner mobiler Regale 36 zwecks Transports zu den Kommissionierplätzen 22 entstanden sind. Ein derartiges Kommissionierkonzept, das auf der Verwendung von mobilen Regale 36 als Quellen aufbaut, ist exemplarisch in der WO 2007/011814 A2 (Kiva) beschrieben.

Fig. 3 zeigt den Aktionsbereich 14 der Fig. 1 in isolierter Form, wobei zur Verdeutlichung einer Positionierung des Aktionsbereichs 14 innerhalb des Systems 10 die (imaginären) Koordinatenachsen X und Z zusätzlich in der Fig. 3 gezeigt sind. Die Wahl des Orts des Ursprungs 0 dieser Koordinatenachsen ist willkürlich. Der Ursprung könnte überall innerhalb des Systems 10 lokalisiert sein.

Der Aktionsbereich 14 der Fig. 3 wird exemplarisch durch fünf Eckpunkte bzw. Positionen P(X/Z), nämlich P1-P5, aufgespannt. Er könnte durch mehr oder weniger Eckpunkte aufgespannt werden. Das System 10 der Fig. 1 und 3 ist vorzugsweise entlang einer (insbesondere gleichmäßigen) Gitterstruktur 84 ausgerichtet, die durch Gitterpunkte definiert ist. Diese Gitterpunkte sind in der Fig. 3 (teilweise) hervorgehoben gezeigt. Diese Gitterpunkte können auch genutzt werden, um Wegpunkte 86 für die Navigation und Positionierung der Fahrzeuge 16 zu definieren. Die Wegpunkte 86 können z.B. durch Strichcode-Etiketten implementiert sein, die man entlang der Gitterpunkte der Gitterstruktur 84 am Hallenboden anbringt und die dann von den Fahrzeugen und/oder den Kommissionierpersonen 24 zwecks Orientierung erfasst werden. Die Gitterstruktur 84 ist in der Fig. 3 ferner durch (imaginäre) Hilfslinien 88 angedeutet, die wiederum mit einer Gitterkonstanten a zueinander beabstandet sein können. Es versteht sich, dass die in der Fig. 3 gezeigte Gitterstruktur 84 nur exemplarischer Natur ist. Die Gitter- bzw. Wegpunkte 86 müssen z.B. nicht gleichmäßig über die Fläche des Systems 10 verteilt sein. Die räumliche Verteilung der (Orientierungs-)Punkte 86 kann willkürlich gewählt werden. Alternativ zu den physischen Wegpunkten 86 könnte z.B. ein lokales GPS-System oder ähnliches verwendet werden.

Der in der Fig. 3 gezeigte Kommissionierplatz 22-i wird manuell betrieben, wie es durch einen mit einer Strichlinie gezeigten Kommissionierer 24 angedeutet ist. Vorzugsweise ist allgemein eine relative Position P der Kommissionierplätze 22 in dem Ort verankert, an welchem sich die Kommissionierperson 24 bzw. der Kommissionierroboter 26 während der Kommissionierung aufhält. Die Position P stellt in diesem Sinne einen Ankerpunkt des Kommissionierplatzes 22 dar. In der Fig. 3 entspricht die relative Position des Kommissionierplatzes 22-1 der Position P7. Die Position P7 hat die X-Koordinate "18" und die Z-Koordinate "13", so dass die Position P7 auch als "P(18/13)" ausgedrückt werden kann.

Der Kommissionierplatz 22-i der Fig. 3 weist eine äußere Begrenzung 90 auf, die in der Fig. 3 durch eine Strichlinie angedeutet ist. Die äußere Begrenzung 90 wird durch die Positionen P8 bis P11 aufgespannt und definiert exemplarisch ein Rechteck. Die äußere Begrenzung 90 umschließt die Fläche bzw. den Raum um die relative Position P7 des Kommissionierplatzes 22-i herum, in der bzw. in dem sich die Fahrzeuge 16 (hier nicht gezeigt) aufhalten, während ein Kommissioniervorgang durchgeführt wird. Sowohl die relative Position P als auch die äußere Begrenzung 90 der Kommissionierplätze 22 ändern sich im Allgemeinen kundenauftragsspezifisch über die Zeit, wie es nachfolgend noch näher erläutert werden wird.

Des Weiteren ist in der Fig. 3 ein Fahrzeug 16-1 angedeutet, das sich an der Position P12 bzw. "P(4/12)befindet, um entlang eines Fahrwegs bzw. einer Fahrroute, die durch den Pfeil 28 angedeutet ist, in den Kommissionierplatz 22-i einzufahren. Das Fahrzeug 16-1 kann z.B. einen kundenauftragsspezifischen Quellbehälter 16 (nicht dargestellt) oder Zielbehälter 20 (nicht dargestellt) transportieren.

Es versteht sich, dass die Größe des Kommissionierplatzes 22-i (über die Zeit) variieren kann, ohne dass sich die relative Position (P7 in Fig. 3) verändert, die sich aber auch über die Zeit ändern kann, wenn es erforderlich ist. Üblicherweise wird die Größe (Fläche bzw. Raum) des Kommissionierplatzes 22-i so gewählt, dass alle Fahrzeuge 16 innerhalb des Kommissionierplatzes 22-i bzw. innerhalb dessen äußeren Begrenzung 90 gepuffert werden können. Dies bedeutet, dass sich die Größe und/oder Gestalt des Kommissionierplatzes 22-1 über die Zeit ändern kann. Der in der Fig. 3 gezeigte Kommissionierplatz 22-i ist z.B. relativ groß, um viele Fahrzeuge 16 gleichzeitig zu puffern. Die Größe kann aber auch sehr klein gemacht werden, indem z.B. zusammengehörige Quellbehälter 18 Zielbehälter 20 vom gleichen Fahrzeug 16 transportiert werden und indem sich dieses Fahrzeug 16 lediglich mit der Kommissionierperson 24 oder dem Kommissionierroboter 26 am vorbestimmten Treffpunkt (z.B. P7) zu einem vorbestimmten Zeitpunkt treffen muss. Es versteht sich, dass sich der Punkt P7 über die Zeit ändern kann. Dies ist z.B. dann der Fall, wenn ein fahrbarer Kommissionierroboter 26 oder auf einem Fahrzeug 16 befindliche Kommissionierperson 24 die Artikel umsetzt, während sich sowohl der Kommissionierroboter 26 bzw. die Kommissionierperson 24 als auch der Quellbehälter 18 und der Zielbehälter 20 mit einer im Wesentlichen gleichen Geschwindigkeit und mit einem im Wesentlichen konstanten Abstand relativ zueinander bewegen. Dies bedeutet, dass das Umsetzen auch während der Fahrt (d.h. dynamisch) erfolgen kann. Die relativen Geschwindigkeiten und Abstände der beteiligten Rendezvous-Partner sollte während des Umsetzens annähernd gleich sein. Abweichungen in der Geschwindigkeit und im Abstand sind so lange akzeptabel, wie das Umsetzen am vorgegebenen Ort sicher vollzogen werden kann. Die Kommissionierperson 24 sollte den umzusetzenden Artikel also möglichst nicht über größere Distanzen (z.B. mehrere Meter) in den vorbeifahrenden Zielbehälter 20 werfen müssen.

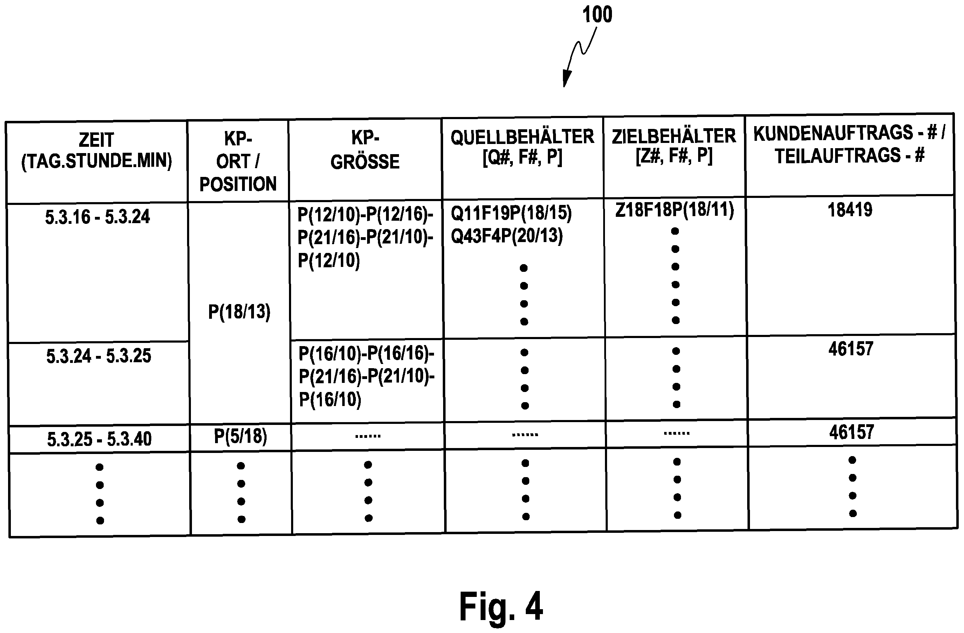

Fig. 4 zeigt einen exemplarischen Datensatz 100. Der Datensatz 100 ist z.B. in einer tabellarischen Form definiert und dient einer Veranschaulichung einer örtlichen, zeitlichen und geometrische Veränderung eines Kommissionierplatzes 22. Der Datensatz 100 umfasst z.B. sechs Spalten. Die erste Spalte verdeutlicht eine Zeitlinie, die exemplarisch in einem Format "Tag.Stunde.Minute" wiedergegeben ist. Die zweite Spalte verdeutlicht die oben genannte relative Position P des entsprechenden Kommissionierplatzes 22, d.h. einen Ort bzw. eine Position P innerhalb des Aktionsbereichs 14. Die dritte Spalte verdeutlicht eine geometrische Größe bzw. eine äußere Abmessung des Kommissionierplatzes 22, z.B. durch Definition der Eckpunkte, die über die äußere Begrenzung 90 (vgl. Fig. 3) geschlossen miteinander verbunden sind. Die vierte Spalte verdeutlicht einen oder mehrere der Quellbehälter 18 im Format "Behälternummer, Fahrzeugnummer, Position", der bzw. die am Kommissionierplatz 22 benötigt werden. Die fünfte Spalte verdeutlicht die entsprechend benötigten Zielbehälter 20 im Format "Zielbehälternummer, Fahrzeugnummer, Position". Die sechste Spalte verdeutlicht eine Kundenauftragsnummer bzw. eine Teilauftragsnummer, die den zuvor genannten Spalten zugewiesen ist.

Es versteht sich, dass der Datensatz 100 mehr oder weniger Spalten aufweisen kann. Ferner versteht es sich, dass die Datenfelder des Datensatzes 100 verteilt im System 100 gespeichert werden können. Datenfelder in einer horizontalen Richtung der exemplarischen Tabelle der Fig. 4 gehören zusammen bzw. sind einander zugewiesen bzw. zugeordnet.

Der Datensatz 100 beschreibt z.B. zwei unterschiedliche relative Positionen P des zugehörigen Kommissionierplatzes 22, nämlich die Position P(18/13) und P(5/18). Die Position P(18/13) wird während einer Zeit 5.3.16 - 5.3.25 eingenommen. Die Position P(5/18) wird während einer Zeit 5.3.25 - 5.3.40 eingenommen. Während der Zeit 5.3.16 - 5.3.25 verbleibt der Kommissionierplatz 22 an der relativen Position P(18/13), nimmt aber unterschiedliche Größen ein. Während der Zeit 5.3.16 - 5.3.24 ist der Kommissionierplatz 22 größer als während der Zeit 5.3.24 - 5.3.25. Der Auftrag mit der Nummer "18419" benötigt z.B. mehr Quell- und/oder Zielbehälter 18 bzw. 20 als der zeitlich nachfolgende Auftrag mit der Nummer "46157". Der Auftrag mit Der Nummer "18419" benötigt z.B. den Quellbehälter 18 mit der Nummer "11", der mit dem Fahrzeug 16 mit der Nummer "19" an die Position P(18/15) innerhalb des Kommissionierplatzes 22 zu transportieren ist. Der entsprechende Zielbehälter 20 mit der Nummer "18" ist durch das Fahrzeug 16 mit der Nummer "18" an die Position P(18/11) zu bringen, um die Kommissionierung durchführen zu können.

Ab dem Zeitpunkt 5.3.25 ändert der Kommissionierplatz 22 seine relative Position P, nämlich zur Position P(5/18), obwohl z.B. die gleiche Auftragsnummer "46157" wie zuvor bearbeitet wird. Dies kann mehrere Gründe haben. Ein möglicher Grund ist z.B. darin zu sehen, dass weitere Quellbehälter 18, die zur Abarbeitung des Auftrags mit der Nummer "46157" benötigt werden, zwar bereits im Aktionsbereich 14 vorhanden sind, jedoch aktuell z.B. bei einem anderen Kommissionierplatz 22 (hier nicht gezeigt) benötigt werden. Auf diese Weise kann eine Rücklagerung dieses Quellbehälters 18 vermieden werden.

Es versteht sich, dass jeder der aktuell eingesetzten Kommissionierplätze 22 vorzugsweise einen eigenen Datensatz 100 hat. Die Datensätze 100 bringen die kundenauftragsspezifischen Zusammengehörigkeiten der Quellbehälter 18, Zielbehälter 20 und des jeweiligen Kommissionierplatzes 22 zum Ausdruck.

Die Datensätze 100 stellen das Ergebnis der oben beschriebenen Optimierungsprozesse dar. Aus dem Datensatz 100 der Fig. 4 ist ersichtlich, dass es z.B. ausreicht, für die Quellbehälter 18 und die Zielbehälter 20 lediglich Positionen P innerhalb vorgegebener Zeitfenster zu definieren, ohne den konkreten Fahrweg im Detail vorzugeben. Da die Fahrzeuge 16 vorzugsweise autonom fahren, ist die detaillierte Vorgabe des konkreten Fahrwegs auch nicht notwendig. Die Angabe der anzusteuernden Zielposition ist in diesem Fall ausreichend. Die zeitliche Definition des Zielpunkts sowie die Auswahl der relativen Position des Kommissionierplatzes 22 und der zu benutzenden Fahrzeuge 16 und Behälter 18 und 20 ist jedoch Ausdruck des Optimierungsprozesses, insbesondere der Wegeoptimierung und/oder der Laufzeitoptimierung, wie oben erläutert.

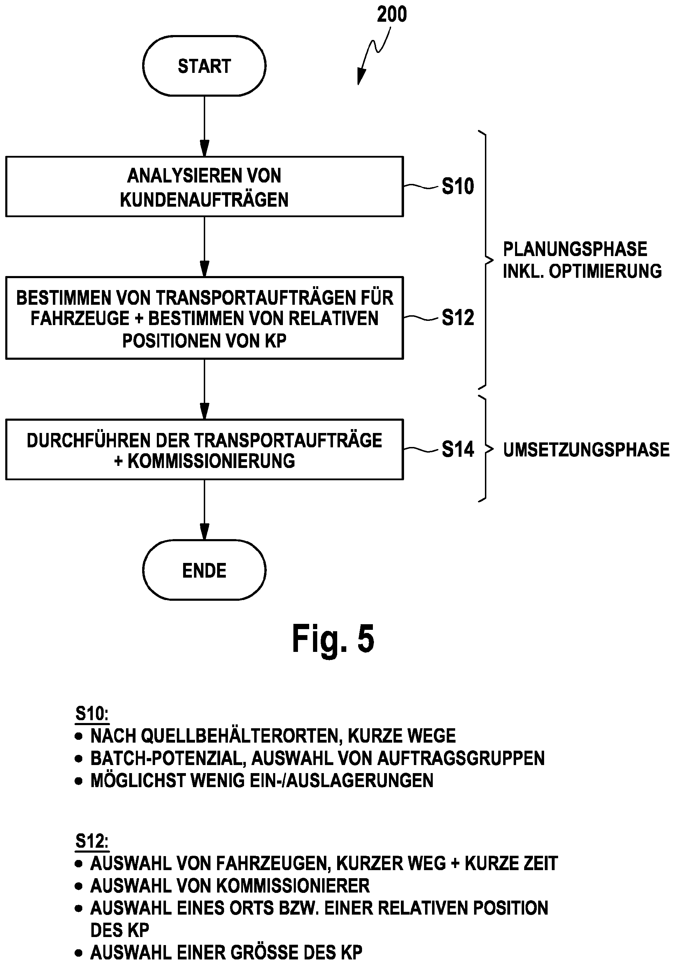

Fig. 5 zeigt ein Flussdiagramm eines Verfahrens 200 zum Betreiben eines Lager- und Kommissioniersystems 10 nach dem Rendezvous-Kommissionier-Prinzip, bei dem zu kommissionierende Güter bzw. Artikel an örtlich variablen Kommissionierplätzen gemäß Kundenaufträgen aus Quellbehältern entnommen und in Zielbehälter abgegeben werden.

In einem ersten Schritt S10 werden die Kundenaufträge analysiert. Die Analyse kann nach einem oder mehreren unterschiedlichen Kriterien erfolgen. Ein mögliches Kriterium stellt der Quellbehälterort dar. Die Quellbehälter 18 sind datentechnisch mit den Artikeltypen verknüpft, die sie enthalten, die wiederum durch die Kundenaufträge benötigt werden. Des Weiteren sind die Quellbehälter 18 datentechnisch mit ihrer aktuellen Position verknüpft, die in der Regel mit ihrem Lagerort innerhalb des Lagerbereichs 12 übereinstimmt. Üblicherweise gibt es für jeden Artikeltyp aber mehrere Quellbehälter 18, die diesen Artikeltyp bevorraten, also mehrere mögliche Quellen. Und somit gibt es für jeden Artikeltyp in der Regel mehrere Quellbehälterorte, von wo die Fahrzeuge 16 die entsprechenden Quellbehälter 18 abholen und zum Kommissionierplatz 22 bringen können. In diesem Sinne werden die Kundenaufträge also nach den Artikeltypen analysiert, woraus sich die möglichen Quellbehälterorte ergeben. Die sich ergebenden Quellbehälterorte haben - als mögliche Startpunkte - später Einfluss auf die Wegoptimierung, nämlich dann, wenn der Ort bzw. die relative Position P des variablen Kommissionierplatzes 22 - als Endpunkt - innerhalb des Aktionsbereichs 14 festgelegt wird.

Ein weiteres Analysekriterium des Schritts S10 ist im Batch-Potential der Kundenaufträge zu sehen. Wie oben bereits ausgeführt, werden bei der Batch-Kommissionierung Gruppen von unterschiedlichen Kundenaufträgen zusammengestellt, die üblicherweise den gleichen Artikeltypen benötigen. Dies verringert eine Anzahl der Ein-/Auslagerungen in und aus dem Lagerbereich 12.

Weitere mögliche Kriterien sind z.B. eine Zugriffshäufigkeit (ABC-Verteilung), eine Handhabbarkeit der Artikel (manuelle/automatisierte Kommissionierbarkeit) und Ähnliches.

In einem Schritt S12 werden Transportaufträge für die Fahrzeuge 16 sowie die relativen Positionen P für die Kommissionierplätze 22 bestimmt. Es versteht sich, dass die Schritte S10 und S12 simultan durchgeführt werden können. Die Schritte S10 und S12 verdeutlichen eine Planungsphase des Verfahrens 200, in welcher zusätzlich Optimierungsschritte durchgeführt werden.

Im Schritt S12 können spezifische Fahrzeuge 16 ausgewählt werden, die die Quellbehälter 18, die Zielbehälter 20 sowie ggf. die Kommissionierperson 24 und/oder den Kommissionierroboter 26 zum variablen Kommissionierplatz 22 verbringen sollen. Dabei spielen wiederum vorzugsweise die Faktoren "kürzester Weg" und "kürzeste Zeit" eine Rolle. Ferner kann im Schritt S12 ein Kommissionierer, d.h. eine Kommissionierperson 24 oder ein Kommissionierroboter 26, aus einer Gruppe von zur Verfügung stehender Kommissionierern ausgewählt werden, die aktuell mit keiner Kommissionierung beauftragt sind. Außerdem kann im Schritt S12 die Auswahl eines Orts bzw. der relativen Position P des Kommissionierplatzes 22 erfolgen. Alternativ und ergänzend kann die Größe des Kommissionierplatzes 22 ausgewählt bzw. bestimmt werden.

In einem Schritt S14 werden anschließend die in Schritt S12 bestimmten Transportaufträge und Kommissionierungen (Entnahme und Abgabe) durchgeführt. Der Schritt S14 stellt die Umsetzungsphase des Verfahrens 200 dar, das anschließend endet.

Obwohl die Aktionen (Transport, Entnahme, Abgabe, etc.) innerhalb des Aktionsbereichs 14 in der obigen Beschreibung im Wesentlichen zweidimensional in der Fläche XZ dargestellt wurden, versteht es sich, dass auch die dritte Dimension Y, d.h. die Höhe, zusätzlich berücksichtigt werden kann. Die Fahrzeuge 16 können z.B. als autonom fliegende Drohnen (nicht gezeigt) ausgebildet sein, die die Behälter 18 und 20 in unterschiedlichen Höhen an den variablen Kommissionierplätzen 22 andienen. Alternativ können Bühnen eingesetzt werden.

Nachfolgend werden allgemein weitere Nutzungen, Verfahren und Verfahren betrachtet, die durch die Erfindung möglich sind.

Im Wareneingang (siehe WE 50 in Fig. 1) können sortenreine Waren aus größeren Einheiten (z.B. Wareneingangspalette mit einer Vielzahl von Waren des gleichen Typs) in kleinere Lagerbehälter (z.B. Quellbehälter 18) vereinzelt werden, die dann wiederum sehr schnell über das gesamte System 10 verteilt werden können, wo sie benötigt werden. Cross-Docketing ist möglich, weil auch Zielbehälter 20 bereits im Wareneingang 50 mit Wareneingangsartikeln bestückt werden können, indem der entsprechende Kommissionierplatz 22 vorübergehend in den Wareneingang 50 gelegt wird, so dass Aufträge mit höchster Priorität bei sehr geringen Auftragsdurchlaufzeiten erledigt werden können. Aufträge können generell im Wareneingang 50 vervollständigt werden, was zu geringen Auftragsdurchlaufzeiten führt, indem z.B. einzelne Picks gezielt dort ausgeführt werden.

Analoges gilt für die Handhabung von Retourenwaren. Retourenwaren können gleich vor Ort, d.h. z.B. im Wareneingang 50, vereinnahmt und gleich wieder kommissioniert werden, da die Kommissionierplätze 22 ja bekanntlich dynamisch sind. Sobald sich eine Retourenware an irgend einer Stelle im System 10 als wiederverkaufsfähig "meldet", kann, vorzugsweise mit hoher Priorität, einer passender (oder neuer) Zielbehälter 20 an diese Stelle zur Abholung verbracht werden.

Die oben im Zusammenhang mit der Kommissionierung beschriebenen Konzepte lassen sich natürlich, nach erfolgter Fertigstellung der Aufträge, auch auf die Aspekte Konsolidierung, Sequenzierung und Verdichtung übertragen.

Ein weiterer Vorteil betrifft eine "Picksequenz". Ein eingeplanter Quellbehälter 18, der gerade zu seinem dynamischen Kommissionierplatz 22 unterwegs ist, kann eine Picksequenz auslösen. Dies bedeutet, dass nicht nur der zugeordnete Zielbehälter 20, der zu diesem eingeplanten Quellbehälter 18 gehört, sondern auch weitere Zielbehälter 20 sich zu diesem Kommissionierplatz 22 aufmachen, die den gleichen Artikel benötigen, deren Auftrag aber eigentlich noch gar nicht gestartet ist. Die weiteren Zielbehälter 20 können sich dann mit dem eingeplanten Quellbehälter 18 am Kommissionierplatz 22 treffen (Multi-Order-Pick).

Noch ein weiterer Vorteil ist darin zu sehen, dass unterschiedlich dimensionierte Quell- und Zielbehälter 18, 20 zueinander gebracht werden können, weil die Kommissionierplätze 22 entsprechend dimensionierbar sind. Paletten, Gitterboxen, Behälter, Kartons und so weiter können individuell an beliebigen Orten bzw. Stellen innerhalb des Systems 10 (z.B. auch in speziellen Zonen und Vorrichtungen) zum Kommissionieren bereitgestellt werden. Die übliche förder- und lagertechnische Aufteilung bzw. Anordnung (groß, klein, leicht, schwer, etc.) kann gänzlich entfallen.

Ferner können Leerlaufzeiten reduziert und Auslastungsgrade erhöht werden. Bedingt durch eine individuelle Bereitstellung der Quell- und Zielbehälter 18, 20 an einem beliebigen Ort 22 ergeben sich durch die unterschiedlich langen Wege dorthin auch unterschiedliche Ankunftszeiten. Die Kommissioniererperson 24 bzw. der Kommissionierroboter 26 können z.B. erst dann an den "temporären" Kommissionierplatz 22 gerufen werden, wenn der entsprechende Auftrag bearbeitet werden kann, d.h. die benötigten Behälter 18 und 20 in ausreichender Anzahl vor Ort sind.

Außerdem kann, im Gegensatz zu fest installierten konventionellen Stetigförderern, unmittelbar am Kommissionierplatz 22 Einfluss auf eine Sequenz genommen werden, indem die Fahrzeuge 16 sich entsprechend einreihen, sich z.B. auch zwischen bereits wartende Fahrzeugen 16 einreihen.

Insbesondere ist durch eine Ortsüberwachung der Fahrzeuge 16 auch immer eine aktuelle Position der Behälter 18 und 20 sowie der Personen 24 und der Roboter 26 bekannt. Eine explizite Nachverfolgung (Tracking) der Behälter 18 und 20 (z.B. durch entsprechende Lesegeräte) ist innerhalb des Systems 10 nicht erforderlich, weil die Fahrzeugverfolgung ausreicht, um zu wissen, wo sich gerade welcher Artikel/Auftrag befindet. Eine erneute Überprüfung der Behälter 18 und 20 am Kommissionierplatz 22 ist überflüssig.

### Bezugszeichenliste:

- 10: System
- 12: Lagerbereich
- 14: Aktionsbereich
- 16: Fahrzeuge
- 18: Quellbehälter
- 20: Zielbehälter
- 22: Kommissionierplatz
- 24: Kommissionierperson
- 26: Kommissionierroboter
- 28: Fahrtrichtung von 16 (dunkle Pfeile)
- 30: Steuereinrichtung
- 32: Kommunikation, drahtlos
- 34: (stationäres) Regal
- 36: (mobiles) Regal
- 38: Regalgasse
- 40: (Regal-)Shuttle/RBG
- 42: Lastaufnahmemittel von 40
- 44: Vorzonenbereich
- 46: Vertikalförderer
- 48: Leerstellen
- 50: Wareneingang (WE)
- 52: Warenausgang (WA)
- 60: Kommissioniersteuerung
- 62: Auftragsverwaltung
- 64: Leitstrategien
- 66: Pick-by-Voice, PbV
- 68: Pick-by-Light, PbL
- 70: Pick-by-Vision
- 72: Warenwirtschaftssystem
- 74: Lagerverwaltung
- 76: Materialfluss
- 78: (Lager-)Platzverwaltung
- 80: Kommunikationsnetzwerk
- 82: Schnittstellen
- 84: Gitterstruktur
- 86: Wegpunkte
- P: Positionen
- 88: Hilfslinien
- a: Gitterkonstante
- 90: äußere Begrenzung von 22
- 100: Datensatz
- 200: Verfahren

## Patentansprüche

1. Lager- und Kommissioniersystem (10), das nach einem Rendezvous-Kommissionier-Prinzip, bei dem zu kommissionierende Güter an örtlich variablen Kommissionierplätzen (22) gemäß Kundenaufträgen aus Quellbehältern (18) entnommen und in Zielbehälter (20) abgegeben werden, betrieben wird und das aufweist:
eine Vielzahl von Fahrzeugen (16) zum Transportieren der Quellbehälter (18) und der Zielbehälter (20) innerhalb des Systems (10);
einen Lagerbereich (12), wo eine Vielzahl der Quellbehälter (18), vorzugsweise in Regalen (34, 36), bevorratet sind;
einen Aktionsbereich (14), in welchem sich die Fahrzeuge (16), vorzugsweise autonom, bewegen;
einen örtlich variablen Kommissionierplatz (22), der eine variable relative Position (P) innerhalb des Aktionsbereichs (14) aufweist, die sich über die Zeit kundenauftragsabhängig immer wieder ändert, und an dem eine Rendezvous-Kommissionierung durch eine Kommissionierperson (24) und/oder einen Kommissionierroboter (26) durchgeführt wird; und
eine Steuereinrichtung (30), die für die Rendezvous-Kommissionierung eingerichtet ist, indem die relative Position (P) sowie zugehörige Transportaufträge für die Fahrzeuge (16) optimiert durch die Steuereinrichtung bestimmt werden, wobei die Transportaufträge für die Fahrzeuge (16) ein zeitlich und örtlich synchronisiertes Zusammentreffen einer kundenauftragsspezifischen Anzahl der Quellbehälter (18) und einer kundenauftragsspezifischen Anzahl der Zielbehälter (20) am variablen Kommissionierplatz (22) definieren.

2. Lager- und Kommissioniersystem (10) nah Anspruch 1, wobei die optimierte Bestimmung der relativen Position sowie der Transportaufträge der Fahrzeuge (16) durch die Steuereinrichtung (30) eine Wegoptimierung und/oder eine Laufzeitoptimierung umfasst.

3. Lager- und Kommissioniersystem (10) nach Anspruch 1 oder 2, wobei der variable Kommissionierplatz (22) ferner eine äußere Begrenzung aufweist, die kundenauftragsspezifisch durch die Steuereinrichtung (30) so bestimmt wird, dass alle zur Abarbeitung des jeweiligen Kundenauftrags benötigten Behälter (18, 20) innerhalb des variablen Kommissionierplatzes (22) pufferbar sind.

4. Lager- und Kommissioniersystem (10) nach einem der Ansprüche 1 bis 3, wobei der Lagerbereich (12) und der Aktionsbereich (14) unterschiedlich sind.

5. Lager- und Kommissioniersystem (10) nach einem der Ansprüche 1 bis 4, wobei eines der Fahrzeuge (16) eingerichtet ist, die Kommissionierperson (24) zu tragen und sicher innerhalb des Aktionsbereichs (14) zu bewegen.

6. Lager- und Kommissioniersystem (10) nach einem der Ansprüche 1 bis 5, wobei der Kommissionierroboter (26) auf einem der Fahrzeuge (16) befestigt ist.

7. Lager- und Kommissioniersystem (10) nach einem der Ansprüche 1 bis 6, wobei der Aktionsbereich (14) eine feste Position (P) innerhalb des Systems (10) und/oder eine feste äußere Begrenzung aufweist.

8. Lager- und Kommissioniersystem (10) nach einem der Ansprüche 1 bis 7, wobei der Aktionsbereich (14) einen Wareneingang (50) umfasst.

9. Lager- und Kommissioniersystem (10) nach einem der Ansprüche 1 bis 8, wobei die Steuereinrichtung (30) ferner eingerichtet ist, Retourenwaren am Kommissio-nierplatz (22) zu vereinnahmen und unverzüglich in einen neuen Kommissionierauftrag zwecks Kommissionierung einzuplanen, vorzugsweise indem ein passender Zielbehälter (20), der die vereinnahmte Retourenware umfasst, zum Kommissionierplatz (22) bewegt wird.

10. Verfahren (200) zum Betreiben eines Lager- und Kommissioniersystems (10) nach einem Rendezvous-Kommissionier-Prinzip, bei dem zu kommissionierende Güter an örtlich variablen Kommissionierplätzen (22) gemäß Kundenaufträgen aus Quellbehältern (18) entnommen und in Zielbehälter (20) abgegeben werden, und wobei das System (10) aufweist: eine Vielzahl von Fahrzeugen (16) zum Transportieren der Quellbehälter (18) und der Zielbehälter (20) sowie vorzugsweise von Kommissionierpersonen (24) bzw. Kommissionierrobotern (26) innerhalb des Systems (10); einen Lagerbereich (12) und einen Aktionsbereich (14); einen örtlich variablen Kommissionierplatz (22), der eine variable relative Position (P) innerhalb des Aktionsbereichs (14) aufweist, die sich über die Zeit kundenauftragsabhängig immer wieder ändert; und eine Steuereinrichtung (30), die für eine Planung und Ausführung der Rendezvous-Kommissionierung eingerichtet ist; wobei das Verfahren aufweist:
Analysieren (S10) einer Vielzahl von Kundenaufträgen, insbesondere nach:
Quellbehälterorten, Zielbehälterorten und/oder einem Batch-Potenzial;
Auswählen einer optimalen relativen Position (P) für den variablen Kommissionierplatz (22) und Bestimmen (S12) von Transportaufträgen für die Fahrzeuge (16), wobei die Transportaufträge für die Fahrzeuge (16) ein zeitlich und örtlich synchronisiertes Zusammentreffen einer kundenauftragsspezifischen Anzahl der Quellbehälter (18) und einer kundenauftragsspezifischen Anzahl der Zielbehälter (20) an der ausgewählten relativen Position des variablen Kommissionierplatzes (22) definieren; und
Durchführen (S14) der Transportaufträge und der Kommissionierung am variablen Kommissionierplatz (22).

11. Verfahren nach Anspruch 10, wobei die Kommissionierung dynamisch erfolgt, indem sich die Quellbehälter (18), die Zielbehälter (20) und die Kommissionierperson (24) bzw. der Kommissionierroboter (26) während einer Entnahme und Abgabe der Güter durch den Aktionsbereich (14) bewegen.

## Claims

1. A storage and order-picking system (10) operated in accordance with a rendezvous-picking principle, wherein goods to be picked are removed from source containers (18) and delivered to destination containers (20) at locally variable picking stations (22) in accordance with customer orders, comprising:
a plurality of vehicles (16) for transporting the source containers (18) and the destination containers (20) within the system (10);
a warehousing area (12), where a plurality of the source containers (18) is stocked, preferably in racks (34, 36);
an action area (14) in which the vehicles (16) move, preferably in an autonomous manner;
a locally variable picking station (22) having a variable relative position (P) within the action area (14) which changes again and again over time dependent on customer orders and at which rendezvous-picking is performed by a picking person (24) and/or a picking robot (26); and
a controlling device (30) configured for the rendezvous-picking by determining the relative position (P) as well as associated transport orders for the vehicles (16), by the controlling device ,in an optimized manner, wherein the transport orders for the vehicles (16) define a temporally and locally synchronized meeting of a customer-order specific number of the source containers (18) and a customer-order specific number of the destination containers (20) at the variable picking station (22).

2. The storage and order-picking system (10) of claim 1, wherein the optimized determination of the relative position as well as the transport orders of the vehicles (16), by the controlling device (30), includes a path optimization and/or a throughput-time optimization.

3. The storage and order-picking system (10) of claim 1 or 2, wherein the variable picking station (22) further comprises an outer boundary, which is determined in a customer-order specific manner by the controlling device (30) so that each of the containers (18, 20) required for the processing of the respective customer order can be buffered within the variable picking station (22).

4. The storage and order-picking system (10) of any of claims 1 to 3, wherein the warehousing area (12) and the action area (14) are different.

5. The storage and order-picking system (10) of any of claims 1 to 4, wherein one of the vehicles (16) is configured to carry the picking person (24) and move the picking person (24) safely within the action area (14).

6. The storage and order-picking system (10) of any of claims 1 to 5, wherein the picking robot (26) is mounted on one of the vehicles (16).

7. The storage and order-picking system (10) of any of claims 1 to 6, wherein the action area (14) comprises a fixed position (P) within the system (10) and/or a fixed outer boundary.

8. The storage and order-picking system (10) of any of claims 1 to 7, wherein the action area (14) includes a goods receipt (50).

9. The storage and order-picking system (10) of any of claims 1 to 8, wherein the controlling device (30) is further configured to receive return goods at the picking station (22), and use the same immediately in scheduling a new picking order for the purpose of picking, preferably by moving a suitable target destination container (20), which includes the received return goods, to the picking station (22).

10. A method (200) for operating a storage and order-picking system (10) in accordance with a rendezvous-picking principle according to which goods to be picked are removed from source containers (18) and delivered to destination containers (20) at locally variable picking stations (22) in accordance with customer orders, and wherein the system (10) comprises: a plurality of vehicles (16) for transporting the source containers (18) and the destination containers (20), as well as preferably picking persons (24) or picking robots (26), within the system (10); a warehousing area (12) and an action area (14); a locally variable picking station (22) comprising a variable relative position (P) within the action area (14) which changes again and again over the time dependent on customer orders; and a controlling device (30) configured for scheduling and performing the rendezvous-picking; wherein the method comprises:
analyzing (S10) a plurality of customer orders, in particular for: source-container locations, destination-container locations, and/or batch potential;
selecting an optimal relative position (P) for the variable picking station (22) and determining (S12) transport orders for the vehicles (16), wherein the transport orders for the vehicles (16) define a temporally and locally synchronized meeting of a customer-order specific number of the source containers (18) and a customer-order specific number of the destination containers (20) at the selected relative position of the variable picking station (22); and
performing (S14) the transport orders and the picking at the variable picking station (22).

11. The method of claim 10, wherein the picking occurs dynamically by moving the source containers (18), the destination containers (20), and the picking person (24), or the picking robot (26), through the action area (14) during removal and delivery of the goods.

## Revendications

1. Système de stockage et de préparation de commandes (10) qui fonctionne selon un principe de préparation de commandes sur rendez-vous, des articles dont la commande est à préparer étant retirés de contenants sources (18) et délivrés dans des contenants cibles (20) à des postes de préparation de commandes localement variables (22) conformément à des commandes de clients, et qui comporte :
une multitude de véhicules (16) destinés à transporter les contenants sources (18) et les contenants cibles (20) à l'intérieur du système (10) ;
une zone de stockage (12) où une multitude de contenants sources (18) sont stockés, de préférence dans des rayonnages (34, 36) ;
une zone d'action (14) dans laquelle les véhicules (16) se déplacent, de préférence de manière autonome ;
un poste de préparation de commandes localement variable (22) qui a à l'intérieur de la zone d'action (14) une position relative variable (P), qui varie en permanence dans le temps en fonction de la commande de client, et auquel une préparation de commande sur rendez-vous est effectuée par un préparateur humain (24) et/ou un préparateur robotisé (26) ; et
un dispositif de commande (30) qui est prévu pour la préparation de commandes sur rendez-vous en ce que la position relative (P) et les ordres de transport associés destinés aux véhicules (16) sont déterminés de manière optimisée par le dispositif de commande, les ordres de transport destinés aux véhicules (16) définissant une coïncidence temporellement et spatialement synchronisée d'un nombre de contenants sources spécifique à la commande client (18) et d'un nombre de contenants cibles (20) spécifique à la commande client au poste de préparation de commandes variable (22).

2. Système de stockage et de préparation de commandes (10) selon la revendication 1, la détermination optimisée de la position relative et des ordres de transport des véhicules (16) par le dispositif de commande (30) comprend une optimisation d'itinéraire et/ou une optimisation de temps d'exécution.

3. Système de stockage et de préparation de commandes (10) selon la revendication 1 ou 2, le poste de préparation de commandes variable (22) comportant également une limite extérieure qui est déterminée de manière spécifique à la commande de client par le dispositif de commande (30) de sorte que tous les contenants (18, 20) nécessaires au traitement de la commande de client respective puissent être stockés temporairement à l'intérieur du poste de préparation de commandes variable (22).

4. Système de stockage et de préparation de commandes (10) selon l'une des revendications 1 à 3, la zone de stockage (12) et la zone d'action (14) étant différentes.

5. Système de stockage et de préparation de commandes (10) selon l'une des revendications 1 à 4, l'un des véhicules (16) étant conçu pour transporter le préparateur humain (24) et pour le déplacer en toute sécurité à l'intérieur de la zone d'action (14).

6. Système de stockage et de préparation de commandes (10) selon l'une des revendications 1 à 5, le préparateur robotisé (26) étant monté sur l'un des véhicules (16).

7. Système de stockage et de préparation de commandes (10) selon l'une des revendications 1 à 6, la zone d'action (14) a une position fixe (P) à l'intérieur du système (10) et/ou une limite extérieure fixe.

8. Système de stockage et de préparation de commandes (10) selon l'une des revendications 1 à 7, la zone d'action (14) comprenant une entrée d'articles (50).

9. Système de stockage et de préparation de commandes (10) selon l'une des revendications 1 à 8, le dispositif de commande (30) étant en outre conçu pour collecter au poste de préparation de commandes (22) des articles retournés et pour les planifier immédiatement dans un nouvel ordre de préparation de commandes en vue d'une préparation de commandes, de préférence en déplaçant un contenant cible approprié (20), qui comprend les articles retournés, au poste de préparation de commandes (22).

10. Procédé (200) de fonctionnement d'un système de stockage et de préparation de commandes (10) selon un principe de préparation de commandes sur rendez-vous, dans lequel des articles dont la commande est à préparer sont retirés de contenants sources (18), et délivrés dans des contenants cibles (20), conformément à des commandes de clients à des postes de préparation de commandes localement variables (22) et le système (10) comprenant : une multitude de véhicules (16) destinés à transporter les contenants sources (18) et les contenants cibles (20) ainsi que de préférence des préparateurs humains (24) ou des préparateurs robotisés (26) à l'intérieur du système (10) ; une zone de stockage (12) et une zone d'action (14) ; un poste de préparation de commandes localement variable (22) qui a dans la zone d'action (14) une position relative variable (P) qui varie en permanence dans le temps en fonction de la commande de client ; et un dispositif de commande (30) qui est conçu pour planifier et exécuter la préparation de commandes sur rendez-vous ; le procédé comportant les étapes suivantes :
analyser (S10) une multitude de commandes de clients, notamment en fonction d'emplacements de contenants sources, d'emplacements de contenants cibles et/ou d'un potentiel de lot ;
sélectionner une position relative optimale (P) pour le poste de préparation de commandes variable (22) et déterminer (S12) des ordres de transport destinés aux véhicules (16), les ordres de transport destinés aux véhicules (16) définissant une coïncidence synchronisée dans le temps et dans l'espace d'un nombre de contenants sources (18) spécifique à la commande de client et d'un nombre de contenants cibles (20) spécifique à la commande de client à la position relative sélectionnée du poste de préparation de commandes variable (22) ; et
exécuter (S14) les ordres de transport et la préparation de commandes au poste de préparation de commandes variable (22).

11. Procédé selon la revendication 10, la préparation de commandes étant effectuée de manière dynamique en ce que les contenants sources (18), les contenants cibles (20) et le préparateur humain (24) ou le préparateur robotisé (26) se déplacent dans la zone d'action (14) pendant le retrait et la délivrance des articles.
